# EUROPEAN PATENT APPLICATION

(11) **EP 4 797 174 A1**
(43) Date of publication of application: **26.08.2026**
(21) Application number: 26159644.9
(22) Date of filing: 19.02.2026
(51) Int. Cl.: G06Q 10/0633, G01N 21/88, G01N 21/95, G01N 33/00, G06Q 10/10, H04N 23/56, H04N 23/57

(54) **DIAGNOSIS SYSTEM**

(30) Priority: 19.02.2025 IT 202500003285
(71) Applicant: Prestige Group S.r.l., 70122 Bari (BA) (IT)
(72) Inventor: DCHICHA, Malek, 20054 Segrate (MI) (IT)
(74) Representative: Bruni, Alessandro

(57) **Abstract**

A diagnostic system (1; 100; 200) comprises a structure (2; 102; 202) that internally delimits at least one compartment (1; 103; 203) in which to house an object to be analyzed, wherein the at least one compartment (1; 103; 203) is delimited by a top wall (4; 204), a bottom wall (5; 205), opposite side walls (6, 7; 206, 207) and a rear wall (8), a support (10; 210) positioned inside the at least one compartment (1; 103; 203) in an interposed position between the bottom wall (5; 205) and the top wall (4; 204), at least one image acquisition device (11) positioned internally to the at least one compartment (1; 103; 203), in a raised or lowered position with respect to the support (10; 210), a processing and control unit (12; 112; 212) operatively connected to the at least one image acquisition device (11) and configured to process the data coming therefrom to identify aesthetic characteristics of said object positioned on said support (10; 210).

## Description

### FIELD OF THE INVENTION

The present invention relates to a diagnostic system for the functional and aesthetic analysis of electronic devices or of objects in general.

### BACKGROUND OF THE ART

In the field of reconditioning and repair of electronic devices such as smartphones, it is known to carry out a process of diagnostics and evaluation of their operating condition in a manual manner or in an automated manner.

Manual verification is carried out by a designated technician who performs repeated tests on numerous hardware and software aspects of the devices, with reference, for example, to the functionality of the touch screen, of the camera, of the microphone, of the connectivity (Wi_Fi, Bluetooth, GPS), of the state of the battery. In addition, the technician verifies the aesthetic conditions of the device, evaluating the presence of aesthetic defects such as scratches, dents or the like. This process requires advanced technical skills and is not free from a possible human error that could compromise the reliability of the diagnosis carried out, negatively affecting the overall evaluation of the performance and of the value of the examined device.

Such a manual diagnosis is inevitably influenced by the experience of the technician to the point that qualitative evaluations that are not homogeneous could be reached even among similar devices.

Moreover, manual non_automated management does not allow the state of the device and the management of its possible repairs to be tracked in an organic manner.

Often, the information relating to a diagnosis is annotated manually or managed electronically in separate systems, slowing down the operational flow and increasing the risk of loss or error in the data.

Furthermore, the determination of the commercial value of a device does not depend exclusively on the technical conditions thereof, but also on external market factors, such as demand and supply for a given model, the history of the device, the presence of unauthorized modifications and market fluctuations.

The combination of these factors requires access to updated databases and tools capable of automatically calculating the value.

In order to overcome such drawbacks, systems for the automated diagnosis of electronic devices have been developed in the field, which allow evaluation of the functional and structural conditions of such devices. A representative example of this technology is a station for the automated diagnosis of electronic devices which comprises a control unit to which are connected a communication module with the electronic device, instruments for the identification of visual and hardware defects, and a spatial orientation device of the electronic device. The orientation device is configured to move the device to be examined in a linear or tilting manner with respect to instruments for the identification of defects. The control unit comprises a software for the identification of visual defects, while the visual identification instrument is provided with a camera that captures the appearance of the electronic device during the diagnosis and sends electronic signals to the control unit.

In order to carry out the analysis of the electronic device, it is necessary to position the electronic device in the spatial orientation device, connect the electronic device to the control unit by means of a communication module and actuate the electronic device in movement with respect to the instruments for the identification of visual and hardware defects by means of the orientation device.

Such an automated system, although overcoming some drawbacks of the manual analysis of the electronic devices previously described, presents a limitation due to the non_optimal identification of visual defects of the electronic device.

This problem derives from the fact that, during the diagnosis, the spatial orientation device prevents visualization of the entire outer surface of the device to be analyzed. The orientation device, in fact, comprises gripping elements that act as clamping for engaging and holding the device to be analyzed, preventing visualization of the entire outer portion of the device against which the gripping elements act. Consequently, the quality of the visual diagnosis exhibits lower accuracy.

A further drawback of the solutions currently available concerns constructional complexity and limited flexibility. Existing systems, in fact, are designed mainly for a limited type of electronic devices, such as smartphones, and do not offer suitable tools for the analysis and management of a broader range of technological devices.

There emerges on the market and in the field, for the purposes of circularity, the need to develop a diagnostic system that allows overcoming the drawbacks of the solutions of the background of the art previously described, ensuring complete and uniform visual coverage of the electronic device during the diagnostic process, within the context of a simple and practical_to_use solution.

### OBJECTS OF THE INVENTION

The object of the present invention is to increase the flexibility of use of a system for the aesthetic and functional diagnosis of an electronic device such as a smartphone, a tablet or the like, as well as of objects or devices in general, possibly provided with an electronic component, for example a vehicle.

A further object of the present invention is to optimize the structure of a diagnostic device, for the diagnosis of electronic devices or for the aesthetic diagnosis of objects in general, simplifying it and making it practical to use.

Another object of the present invention is to provide a diagnostic device that is flexible in use, being capable of being made in various dimensions, as a function of the type of object or device to be analyzed, without requiring complete redesign of the entire device.

These and other objects are achieved by the diagnostic system according to claim 1. The dependent claims specify further advantages of the diagnostic system according to the invention.

The advantages offered by the diagnostic system according to the invention are evident.

The diagnostic system according to the invention comprises a structure that delimits internally at least one compartment in which to house an object to be analyzed, wherein the at least one compartment is delimited by a top wall, a bottom wall, opposite side walls and a rear wall, the at least one compartment in turn delimiting at least one front opening for access to its interior, a support positioned inside the at least one compartment in an interposed position between the bottom wall and the top wall, wherein the support is operatively connected to the opposite side walls, at least one image acquisition device positioned internally to the at least one compartment, in a raised or lowered position with respect to the support, a processing and control unit operatively connected to the at least one image acquisition device and configured to process the data coming therefrom to identify aesthetic characteristics of the object positioned on the support.

The diagnostic system further comprises a communication module configured to electronically connect an object to be examined with the processing and control unit comprised in the diagnostic system itself, so as to allow diagnosis of the onboard electronics comprised in such object.

The diagnostic system according to the invention has an overall simple structure and is optimized from an operational point of view to allow examination of the entire outer surface of the object without requiring any movement of the object inside the diagnostic device.

Moreover, the diagnostic system according to the invention can be made in various shapes and dimensions to allow analysis of various objects, both those of limited dimensions, such as a smartphone, and those of larger dimensions such as, for example, a vehicle.

### DESCRIPTION OF THE FIGURES

The present invention will now be described, by way of illustrative, but non_limiting, example, according to preferred embodiments thereof, with particular reference to the Figures of the accompanying drawings, in which:
Figure 1 shows a schematic perspective view of a first embodiment of a diagnostic system according to the invention;
Figure 2 shows a side view of the diagnostic system of Figure 1;
Figure 3 shows a front view of the diagnostic system of Figure 1;
Figure 4 shows a schematic perspective view of a further embodiment of a diagnostic system according to the invention;
Figure 5 shows a schematic perspective view from above of yet a further embodiment of a diagnostic system according to the invention.

### DESCRIPTION OF THE INVENTION

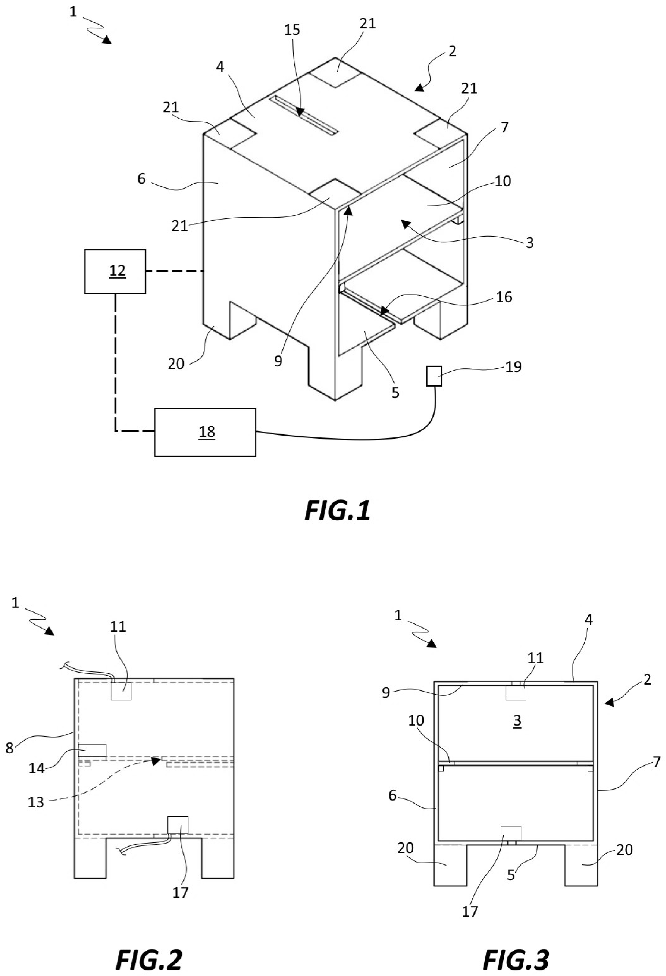

In the accompanying Figures 1-3 there is shown, by way of example but not limitation, a first embodiment of a diagnostic system according to the invention, overall indicated by 1.

The diagnostic system 1 is configured to perform the diagnosis of objects.

By the term diagnosis there is meant the aesthetic and/or functional analysis, from an electronics point of view, of an object.

In the description that follows, generic reference will be made to an object to be analyzed using the term "object".

Preferably, the diagnostic system 1 according to the invention is configured to perform a diagnosis of an object such as a smartphone, a tablet, a notebook or the like. It is understood that, in general, the diagnostic system 1 can be used for the diagnosis of any product, independently of its size and configuration, with reference, for example, to a smartwatch, as well as to a vehicle provided with onboard electronics, for example a motor vehicle.

It should be noted that in the accompanying Figures, the object to be analyzed has been deliberately omitted in order to promote better understanding of the structure of the diagnostic system 1.

The diagnostic system 1 can be made in various dimensions as a function of the type and dimensions of the object to be analyzed, without requiring a complete redesign of the diagnostic system 1 itself.

In the description that follows, reference will be made, by way of example but not limitation, to an object configured as a smartphone, while it being understood that the diagnostic system 1 can be used for the diagnosis of objects different from this.

The diagnostic system 1 comprises a structure 2 that internally delimits at least one compartment 3 in which to house an object to be analyzed.

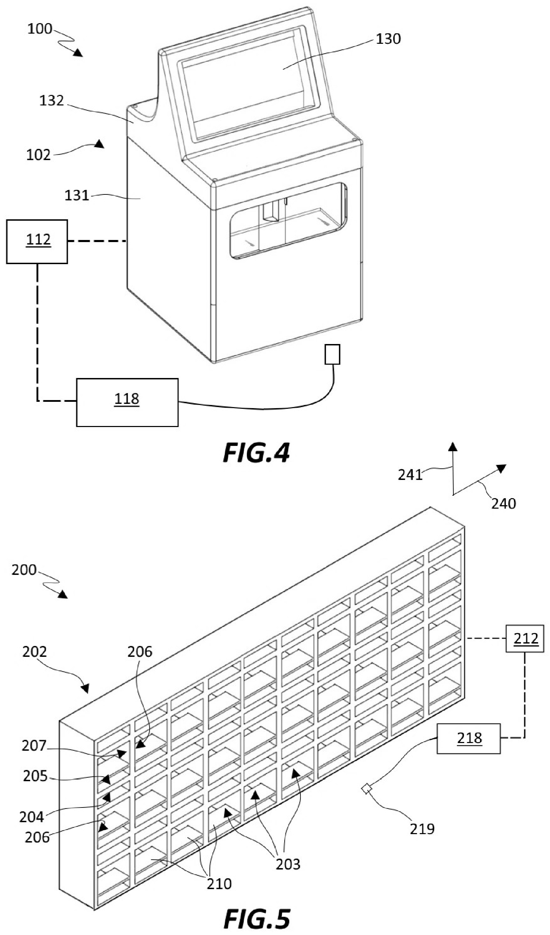

In the accompanying Figures 1-3, the structure 2 is illustrated with a box_shaped, substantially cubic configuration, it being understood that alternative configurations are possible, for example a parallelepiped or a more complex shape (see, for example, Figure 4), within which at least one compartment 3 is delimited.

The at least one compartment 3 is delimited by a top wall 4, a bottom wall 5, opposite side walls 6, 7 and a rear wall 8.

The structure 2 delimits at least one front opening 9 for access into the at least one compartment 3 (see, for example, Figure 1).

The diagnostic system 1 comprises a support 10 positioned inside the at least one compartment 3, in an interposed position between the bottom wall 5 and the top wall 4. According to a preferred embodiment, the support 10 is spaced both from the top wall 4 and from the bottom wall 5.

It is understood that the support 10 may be positioned differently with respect to what is shown in the accompanying Figures 1-3 with reference to the distance from the bottom wall 5 and from the top wall 4.

The support 10 defines a resting plane on which to place an object to be analyzed by means of the diagnostic system 1. Preferably, the support 10 is horizontal or substantially horizontal, in order to stably support the object and prevent it from sliding inside the at least one compartment 3 during the diagnosis.

The support 10 is operatively connected to the opposite side walls 6 and 7. For example, the support 10 bears against respective abutments in turn connected to the opposite side walls.

In particular, the support 10 is connected in a removable or permanent manner to the opposite side walls 6 and 7. The removable type connection allows removal of the support 10 if replacement thereof is required or to allow greater freedom of movement inside the at least one compartment 3 when the diagnostic system 1 is not in operation, for example in order to perform maintenance.

The diagnostic system 1 comprises at least one image acquisition device 11 positioned internally to the at least one compartment 3, and configured to acquire images of an object positioned in the at least one compartment 3, resting on the support 10.

In the accompanying Figure 2 there is shown a single image acquisition device 11, which is illustrated in an extremely schematic manner, positioned above the support 10.

It is understood that according to an alternative embodiment, not shown in the accompanying Figures, the at least one image acquisition device 11 is positioned below the support 10.

According to a further alternative embodiment, not shown in the accompanying Figures, the diagnostic system 1 comprises a plurality of image acquisition devices 11, positioned above or below the support 10, as a function of the dimensions of the diagnostic system 1 itself, with particular reference to the dimensions of the at least one compartment 3 and, consequently, to the dimensions and the type of object to be examined.

The diagnostic system 1 comprises at least a processing and control unit 12, schematically illustrated in the accompanying Figures, which is operatively connected to the at least one image acquisition device 11.

The processing and control unit 12 is configured to process the data received from the at least one image acquisition device 11 in order to identify and recognize the object inserted inside the at least one compartment 3 and to evaluate its aesthetic characteristics.

The processing and control unit 12 may be a processor or comprise at least one processor, possibly network_connected to other processors, not shown in the accompanying Figures.

The method implemented by the processing and control unit 12 for the recognition of possible aesthetic defects of the object placed inside the at least one compartment 3 does not form a specific object of the invention and, therefore, will not be described in detail. The description will be limited to those characteristics useful for understanding the operation of the diagnostic system 1 according to the invention.

The support 10 extends inside the at least one compartment 3. In particular, the support 10 extends at least partially inside the at least one compartment 3 in such a way as to delimit, together with the rear wall 8 and the opposite side walls 6, 7, an internal through opening 13 (see Figure 2). In other words, the support 10, as so configured, defines a resting plane, at least partial, inside the at least one compartment 3, capable of ensuring correct and effective support in position of an object to be examined.

The internal through opening 13 allows horizontal positioning of an object to be analyzed even in the presence of a portion that projects outwardly from the object itself. In other words, the internal through opening 13 prevents the object to be analyzed from resting in an inclined manner with respect to the support 10, thus avoiding undesired deformations of the image of the object to be analyzed. For example, the internal through opening 13 allows a smartphone to remain supported, which remains horizontally aligned on the support 10, even in the presence of a camera or the like that projects outwardly from the smartphone. The portion that projects outwardly from the smartphone, in fact, can be cantilevered on the support 10, so as to engage the internal through opening and not alter the horizontal alignment of the device with respect to the support 10.

It is understood that, according to an alternative embodiment not shown in the accompanying Figures, the support 10 extends across the entire at least one compartment 3, defining a continuous resting plane. According to such alternative, the diagnostic system 1 is devoid of an internal through opening 13 in proximity to the support 10.

The support 10 is made of a transparent material, for example glass or polycarbonate, in order to allow viewing of the object through it, without altering its appearance, proportions or coloration.

According to one embodiment, the support 10 is made of extra_clear glass.

In the case in which the support 10 rests on respective abutments in turn connected to the opposite side walls 6, 7, such abutments are also transparent.

The diagnostic system 1 comprises an illumination system 14 for illuminating internally the at least one compartment 3.

In particular, the illumination system 14 is configured to emit a luminous radiation toward the object to be examined in order to allow effective detection of the aesthetic characteristics thereof.

The illumination system 14 is positioned internally to the at least one compartment 3.

In the accompanying Figure 2, the illumination system 14 is illustrated by way of example but not limitation. Independently of the fact that the illumination system 14 is shown as a rectangular element, positioned at a specific point inside the at least one compartment 3, it is understood that an illumination system 14 comprised in the diagnostic system 1 according to the invention may be configured differently and extend in a peripheral manner inside the at least one compartment 3. In general, the illumination system 14 is configured to generate homogeneous and diffused illumination inside the at least one compartment 3.

According to an alternative embodiment, not shown in the accompanying Figures, the illumination system 14 is positioned externally to the at least one compartment 3. In accordance with such embodiment, the walls delimiting the at least one compartment 3 are transparent, in order to allow the passage of a luminous radiation therethrough.

In general, the illumination system 14 is configured and positioned in such a way as not to interfere with the acquisition of the images of the object to be examined positioned on the support 10.

The diagnostic system 1 according to the invention defines through openings through the walls 5, 6, 7, 8 to allow the passage of cables or the like, in such a way that the same do not interfere with the acquisition of the images of the object to be examined.

In particular, the top wall 4 defines at least one top through opening 15 for the passage of a wiring of the at least one image acquisition device 11, if the latter is positioned in proximity to the top wall 4 or, more generally, in a raised position with respect to the support 10.

In the accompanying Figures, the through opening 15 is shown with an elongated configuration, in order to allow various positionings of the at least one image acquisition device 11 relative to the top wall 4. It is understood that the at least one through opening 15 may have configurations different from the elongated one, for example circular or square, without any limitation.

Similarly, the bottom wall 5 defines a bottom through opening 16 for the passage of a wiring. For example, the bottom through opening 16 can be engaged by a wiring of the at least one image acquisition device 11, in the case in which the latter is installed in proximity to the bottom wall or, more generally, in a lower position with respect to the support 10.

The diagnostic system 1 comprises a further image acquisition device 17 positioned internally to the at least one compartment 3, and configured to acquire images of an object positioned in the at least one compartment 3, resting on the support 10.

In particular, the positioning of the further image acquisition device 17 inside the at least one compartment 3 is opposite to that of the image acquisition device 11. In this way, by means of the image acquisition device 11 and the further image acquisition device 17 it is possible to simultaneously acquire the images of any external portion of the object to be examined.

In the accompanying Figures 1-3, the presence of a single further image acquisition device 17 is illustrated, positioned below the support 10 and shown in an extremely schematic manner.

The configuration and the type of the further image acquisition device 17 correspond to those of the image acquisition device 11.

The further image acquisition device 17 is operatively connected to the processing and control unit 12 for the same purposes previously described in relation to the image acquisition device 11, to which reference is made.

Preferably, it is pointed out that the diagnostic system 1 comprises a mirrored and reflective surface inside the at least one compartment 3, to reflect the image of the object positioned on the support 10.

More precisely, at least the top wall 4, the bottom wall 5 and the side walls 6, 7 are treated or coated with a material or a surface treatment that makes them mirrored and reflective.

By the term "mirrored" there is meant that the surface is capable of reflecting an image.

It is understood that in the case in which one or more among the top wall 4, the bottom wall 5, the side walls 6, 7 and the rear wall 8 are made of transparent material, the mirrored treatment or coating allows the passage of a luminous radiation therethrough. In particular, a luminous radiation coming from a source opposite to the mirrored side, which strikes the treated surface from the rear.

The diagnostic system 1 thus configured allows acquisition of the image of any portion of the object positioned on the support 10 inside the at least one compartment 3. The object, in fact, is directly visible, through the support 10 and through the reflection due to the mirrored walls that delimit the at least one compartment 3.

The diagnostic system 1 according to the present invention comprises a communication module 18 operatively connected to the processing and control unit 12, for the connection in data exchange mode between the latter and the object to be examined.

The communication module 18 comprises at least one connection element 19, engageable in a respective connection seat defined in the object, in order to allow an electrical connection between the object and the communication module 18 itself.

In the accompanying Figures, the connection element 19 is shown schematically without any limiting intent. In other words, the connection element 19 may have any configuration complementary to that of a seat in which it is intended to engage.

According to an alternative embodiment of the diagnostic system 1 not shown in the accompanying Figures, the at least one image acquisition device 11 and the further image acquisition device 17, if present, are movably connected to the structure 2 and actuatable in movement with respect to the support 10, in order to vary the position of the framing point. According to such embodiment, the diagnostic system 1 comprises at least one actuation device connected to the at least one image acquisition device 11 and to the further image acquisition device 17, if present, and to at least one of the walls delimiting the at least one compartment 3. The actuation device is configured to move the at least one image acquisition device 11 and the further image acquisition device 17, if present, with respect to the support 10.

In the accompanying Figures 1-3, there is shown, by way of example but not limitation, a diagnostic system 1 comprising a structure 2 configured as a box_shaped body, substantially cube_shaped, which delimits a single compartment 3, partially separated into two portions by the support 10.

According to such embodiment, the diagnostic system 1 comprises external supports 20 that extend downwardly from the bottom wall 5, externally with respect to the compartment 3. The external supports 20 define rests for positioning the diagnostic system 1 along a surface or a plane.

In particular, the supports 20 keep the structure 2 in a raised position with respect to a resting plane, further facilitating gripping and movement of the diagnostic system 1. In other words, the supports 20 keep the bottom wall 5 raised with respect to a resting plane on which the diagnostic system 1 is placed.

According to such embodiment, the diagnostic system 1 optionally has blind seats 21, defined in proximity to the top wall 4, externally to the compartment 3, which define references in which to position the supports 20 to allow stacked positioning between two diagnostic systems 1.

The diagnostic system 1 may comprise inside the at least one compartment 3 at least one focusing marker element for verifying the operation of the at least one image acquisition device 11 and of the further image acquisition device 17, possibly with different illumination conditions, adjusted by the processing and control unit 12.

In the accompanying Figure 4 there is shown an alternative embodiment of the diagnostic system according to the present invention, overall indicated by 100.

In the description that follows, to indicate components corresponding to those described in relation to the previous embodiment, the same reference numerals will be used, increased by one hundred units. In particular, in the description that follows the components that differ with respect to the previous embodiment will be discussed. For the components corresponding to those of the diagnostic system 1, reference is made to the previous description.

The diagnostic system 100 differs from the previous embodiment in the configuration of the structure 102 and in the presence of a user interface device 130 for the display and input of data by means of tactile input, for example a touchscreen. As an alternative to a touchscreen, the user interface device 130 may comprise a screen for displaying information and a keyboard for inputting data.

The user interface device 130 is operatively connected to a processing and control unit 112 to allow display of data computed thereby. In turn, the processing and control unit 112 may be operatively connected to an external data network, possibly via a wireless or wired connection, according to modalities within the reach of the person skilled in the art, which will not be further described.

The structure 102 has a hollow body 131 that internally delimits a compartment 103, and a closure element 132 to be connected to a top of the hollow body 131 in order to delimit the compartment 103 at the top.

The closure element 132 performs the function of the top wall 4 described in relation to the previous embodiment, delimiting the compartment 103 at the top.

The closure element 132, furthermore, acts as a support for the user interface device 130.

The diagnostic system 100, while having an external configuration different from the previous embodiment, performs the same functionalities as the diagnostic system 1, to which reference is made.

Analogously to what is described in relation to the previous embodiment, the diagnostic system 100 comprises a communication module 118 configured to place the processing and control unit 112 in communication with an object to be examined, to allow the performance of a functional diagnosis of the electronic components installed onboard the object to be analyzed.

In the accompanying Figure 5 a further embodiment of a diagnostic system according to the invention is illustrated, overall indicated by 200.

The diagnostic system 200 is configured to allow the possibly simultaneous analysis of a plurality of objects.

In order to describe the components of the diagnostic system 200 corresponding to those previously set out in relation to the diagnostic system 1, the same reference numerals increased by two hundred units will be used.

The diagnostic system 200, in fact, differs from the diagnostic system 1 in the dimensions and configuration of the structure 202, inside which a plurality of compartments 203 is delimited.

The compartments 203 are arranged side by side along a first direction 240 and stacked along a second direction 241, perpendicular to the first 240.

In the accompanying Figure 5, the number and arrangement of the compartments 203 are shown by way of example, it being understood that alternative embodiments of the diagnostic system 200 are possible comprising a different overall number of compartments 203, with a different layout, without thereby departing from the concept of the present invention.

The diagnostic system 200 comprises a support 210 positioned inside each of the compartments 203, wherein the support 210 has the same characteristics described in relation to the support 10, to which reference is made, in order to perform the same functions.

With reference to the embodiment shown in the accompanying Figure 5, it is noted that the side wall 206 of a first compartment 203 corresponds to the side wall 207 of an adjacent compartment and, analogously, the top wall 204 of a first compartment 203 corresponds to the bottom wall 205 of a further compartment positioned above the first compartment 203.

The at least one compartment 203 comprises a mirrored and reflective surface inside it, according to the same modalities described with reference to the diagnostic system 1, to which full reference is made, to reflect the image of the object positioned on the support 210.

Furthermore, the diagnostic system 200 comprises a processing and control unit 212 and at least one communication module 218 configured for data_exchange connection between each of the objects to be analyzed and the processing and control unit 212, for the same purposes previously described, to which reference is made.

In the accompanying Figure 5, a single communication module 218 is shown by way of example, from which a single connection element 219 extends. It is understood that in reality, the communication module 218 is configured to allow data_exchange connection between each object positioned inside a respective compartment 203 and the processing and control unit 212. It is understood that the diagnostic system 1 may comprise a plurality of communication modules 218, each operatively connected to the processing and control unit 212.

With reference to what has been previously written, it appears evident that the diagnostic systems 1, 100, 200 according to the invention are capable of achieving the intended objects.

The diagnostic systems 1, 100, 200, in fact, allow carrying out an automated analysis of the aesthetic characteristics, as well as of the operation of a possible onboard electronics included in the object to be examined.

The diagnostic systems 1, 100, 200 have an overall simple structure and a limited number of components, within the context of a solution of practical and easy use.

The diagnostic systems 1, 100, 200 furthermore are extremely flexible in their use, being scalable in their dimensions to allow analysis of the aesthetic characteristics as well as the functional ones of objects such as electronic devices, smartphones, tablets, notebooks, smartwatches, as well as vehicles or further objects.

It is pointed out that the diagnostic systems 1, 100, 200 may also be used solely for the analysis of the aesthetic characteristics of an object.

The presence of mirrored and reflective surfaces delimiting the at least one compartment 3, 103, 203, as well as the use of at least one image acquisition device 10, 17 allows examination of the entire outer surface of the object for which a diagnosis is to be carried out, thus overcoming a drawback of traditional_type solutions.

In the foregoing, some embodiments have been described and variants of the present invention have been suggested, but it is to be understood that persons skilled in the art may make modifications and changes without thereby departing from the related scope of protection, as defined by the appended claims.

## Claims

1. A diagnostic system (1; 100; 200), for the recognition and diagnosis of objects, comprising:
- a structure (2; 102; 202) that internally delimits at least one compartment (3; 103; 203) in which to house an object to be analyzed, wherein said at least one compartment (3; 103; 203) is delimited by a top wall (4; 204), a bottom wall (5; 205), opposite side walls (6, 7; 206, 207) and a rear wall (8), said at least one compartment (1; 103; 203) in turn delimiting at least one front opening (9) for access into said at least one compartment (1; 103; 203),
- a support (10; 210) positioned inside said at least one compartment (1; 103; 203) in an interposed position between said bottom wall (5; 205) and said top wall (4; 204), wherein said support (10) is operatively connected to said opposite side walls (6, 7; 206, 207),
- at least one image acquisition device (11) positioned internally to said at least one compartment (1; 103; 203), in a raised or lowered position with respect to said support (10; 210);
- a processing and control unit (12; 112; 212) operatively connected to said at least one image acquisition device (11) and configured to process the data coming therefrom to identify aesthetic characteristics of said object positioned on said support (10).

2. The diagnostic system according to claim 1, wherein said support (10; 210) is removably connected to said opposite side walls (6, 7; 206, 207).

3. The diagnostic system according to claim 1 or 2, wherein said support (10; 210) extends partially inside said at least one compartment (1; 103; 203), delimiting, together with said rear wall (8) and said opposite side walls (6, 7; 206, 207), an internal through opening (13).

4. The diagnostic system according to any one of the preceding claims, comprising an illumination system (14) arranged internally to said at least one compartment (1; 103; 203) and configured to illuminate said at least one compartment (1; 103; 203) and said object positioned therein.

5. The diagnostic system according to any one of the preceding claims, wherein said at least one image acquisition device (11) is operatively connected to said top wall (4; 204) or to said bottom wall (5; 205).

6. The diagnostic system according to any one of the preceding claims, wherein said top wall (4; 204) defines at least one top through opening (13) and/or wherein said bottom wall (5) defines at least one bottom through opening (16).

7. The diagnostic system according to any one of the preceding claims, comprising a further image acquisition device (17) positioned internally to said at least one compartment (1; 103; 203), in a position opposed to said at least one image acquisition device (11) with respect to said support (10; 210).

8. The diagnostic system according to any one of the preceding claims, wherein said top wall (4; 204), said bottom wall (5; 205) and said opposite side walls (6, 7; 206, 207) are treated or coated with a material or a surface treatment that makes them mirrored and reflective, optionally wherein said rear wall (8) is treated or coated to be mirrored and reflective.

9. The diagnostic system according to any one of the preceding claims, comprising at least one actuation device operatively connected to said structure (2; 102; 202) and to said at least one image acquisition device (11) in order to move it inside said at least one compartment (1; 103; 203), relative to said support (10; 210).

10. The diagnostic system according to any one of the preceding claims, comprising a communication module (18; 118; 218) operatively connected to said processing and control unit (12; 112; 212), wherein said communication module (18; 118; 218) comprises a connection element (19) engageable in a respective seat defined in said object, in order to allow a data-exchange connection between said processing and control unit (12; 112; 212) and said object to be examined.
